# EUROPÄISCHE PATENTSCHRIFT

(11) **EP 1 362 632 B1**
(45) Veröffentlichungstag und Bekanntmachung des Hinweises auf die Patenterteilung: **18.07.2007**
(21) Anmeldenummer: 03007026.2
(22) Anmeldetag: 27.03.2003
(51) Int. Cl.: B65D 81/26, B01D 53/26

(54) **Luftentfeuchtungsvorrichtung**
Water extraction device
Dispositif de déshumidification

(30) Priorität: 16.05.2002 DE 10221888
(43) Veröffentlichungstag der Anmeldung: 19.11.2003
(73) Patentinhaber: UHU GmbH & Co. KG, 77815 Bühl (Baden) (DE)
(72) Erfinder: Werhahn, Wilhelm, 76534 Baden-Baden (DE); Kumpf, Hans-Joachim, 77815 Bühl (DE); Panter, Werner, 77855 Achern (DE); Liar, Aurelia, 77855 Achern (DE)
(74) Vertreter: Englaender, Klaus

(56) Entgegenhaltungen:
- EP-A- 0 123 782
- EP-A- 0 832 686
- DE-U- 29 701 931
- FR-A- 2 414 948
- FR-A- 2 750 618
- US-A- 4 913 942
- PATENT ABSTRACTS OF JAPAN vol. 015, no. 409 (C-0876), 18. Oktober 1991 (1991-10-18) & JP 03 169322 A (NIPPON SYNTHETIC CHEM IND CO LTD:THE), 23. Juli 1991 (1991-07-23)

## Beschreibung

Die Erfindung betrifft eine Luftentfeuchtungsvorrichtung mit zumindest einem granulat- bzw. pulverförmigen chemischen Entfeuchtungsmittel, das in einer handhabbaren Form konfektioniert ist.

Zur Luftentfeuchtung von Räumen, z.B. Arbeits-, Aufenthalts-Wohn- und Lagerräumen werden bislang zwei unterschiedliche Systeme eingesetzt, nämlich zum einen eine sogenannte elektrische Luftentfeuchtung und zum andern eine sogenannte chemische Luftentfeuchtung. Die vorliegende Erfindung betrifft chemische Luftentfeuchtung mit beispielsweise in Beutelform konfektioniertem chemischem Luftentfeuchtungsmittel (unter Entfeuchtungsmittel wird vorliegend auch Trocknungsmittel verstanden). Als Trocknungsmittel für chemische Luftentfeuchter hat sich granulatförmiges Calciumchlorid bewährt, das kostengünstig ist und vielseitige Anwendungsmöglichkeiten, einschließlich einem mobilen Einsatz gewährleistet und das im Vergleich zu elektrischen Luftentfeuchtern ohne elektrischen Strom arbeitet. Weitere bekannte Trocknungsmittel spielen im praktischen Einsatz zur Raumentfeuchtung keine Rolle. Zu nennen ist hier z.B. Kieselgel, das überwiegend ein einziges Mal verwendbar ist und seinen Wassergehalt auch durch Verfärbung anzeigen kann. Weiterhin sind zu nennen Bentonit, Molekularsiebe und Aktivkohle, aber auch Kieselgel, die grundsätzlich in Trocknungsöfen regeneriert werden können. Obwohl Calciumchlorid einer Regeneration nicht bzw. nur sehr eingeschränkt zugänglich ist, ist es aufgrund seiner kostengünstigen Herstellbarkeit regenerierbaren Trocknungsmitteln vorzuziehen.

Der bevorzugte Wirkstoff chemischer Luftentfeuchter, Calciumchlorid, wird alternativ zur Konfektionierung in Beuteln auch in Kassetten bereitgestellt, um in Luftentfeuchtern zum Ein satz zu kommen. Die Beutelform ist jedoch aus Kostengründen bevorzugt.

Die Wirkungsweise von Calciumchlorid ist im einzelnen wie folgt: Calciumchlorid zeichnet sich durch hohe Wasserlöslichkeit und überdurchschnittliche Hygroskopizität aus. Typischerweise entzieht Calciumchlorid die Feuchtigkeit aus der Luft, bis die relative Feuchtigkeit der Luft bei ca. 60% liegt und schafft dadurch ideale Raumbedingungen. Während der Aufnahme von Feuchtigkeit aus der Luft löst sich das salzförmige Calciumchlorid allmählich auf. Üblicherweise enthalten Luftentfeuchtungsvorrichtungen auf Grundlage von Calciumchlorid eine Auffangwanne, in der sich die der Luft entzogene Feuchtigkeit in Gestalt einer Calciumchlorid-Salzlösung sammelt.

Eine Luftentfeuchtungsvorrichtung ist aus Patent Abstracts of Japan 03169322 A bekannt. Diese bekannte Vorrichtung besitzt Doppelkammeraufbau mit granulatförmigem Kalziumchlorid in der einen Kammer, durch das aus der Luft Wasser entzogen wird und mit wasserabsorbierendem Harz in der anderen Kammer, das geeignet ist, das vom Kalziumchlorid absorbierte Wasser über eine wasserdurchlässige Membranwand aufzunehmen und zu speichern. Eine lang andauernde Entfeuchtungswirkung unter Steuerung der Entfeuchtungsdynamik ist mit einer derartigen Luftentfeuchtungsvorrichtung jedoch nicht erzielbar.

Aus Patentabstracts of Japan 2001-046832 ist ein Entfeuchtungs- bzw. Trocknungsmittel bekannt, das als Pulver oder Granulat vorliegt, welchem ein Färbemittel zugesetzt ist, um die Entfeuchtungswirkung durch Farbänderung anzuzeigen.

Eine Luftentfeuchtungsvorrichtung gemäß dem Oberbegriff des Anspruchs 1 ist aus der FR-A-2414948 bekannt.

Eine Aufgabe der Erfindung besteht darin, eine Luftentfeuchtungsvorrichtung der eingangs genannten Art zu schaffen, deren Entfeuchtungsdynamik gesteuert werden kann, und insbesondere eine schnell ansprechende und lang andauernde Entfeuchtungswirkung gewährleistet.

Gelöst wird diese Aufgabe durch die Merkmale des Anspruchs 1. Vorteilhafte Weiterbildungen der Erfindung sind in den Unteransprüchen angegeben.

Dadurch dass erfindungsgemäß das Entfeuchtungsmittel in Gestalt von zumindest einem wasserdurchlässigen Beutel konfektioniert ist, der in Kammern unterteilt ist und dadurch, dass erfindungsgemäß das Luftentfeuchtungsmittel in verschiedenen Beutelkammern in unterschiedlichen Korngrößen enthalten ist, lässt sich eine beliebige gewünschte Entfeuchtungsdynamik erzielen. Dabei wird ausgenutzt, dass Luftentfeuchtungsmittel kleinerer Korngröße, z.B. Pulver eine größere Wasseraufnahmekapazität besitzt und Wasser langsamer abgibt als solches größerer Korngröße. Andererseits wird dabei ausgenutzt, dass Luftentfeuchtungsmittel größerer Korngröße eine geringere Wasseraufnahmefähigkeit besitzt und Wasser schneller abgibt als solches kleinerer Korngröße. Im einfachsten Fall wird Luftentfeuchtungsmittel in zwei unterschiedlichen Korngrößen eingesetzt, und die kleinere Korngröße und die größere Korngröße werden derart aufeinander abgestimmt, dass die Luftentfeuchtungsvorrichtung zum einen schnell anspricht und zum anderen möglichst lange in Gang gehalten wird.

Die Entfeuchtungsdynamik wird durch Gestalt und Größe des mit unterschiedlicher Korngröße in diskreten Einheiten konfektionierten Luftentfeuchtungsmittels beeinflusst.

Die erfindungsgemäße Konfektionierung des Luftentfeuchtungsmittels in diskreten Einheiten unterschiedlicher Korngröße kann in verschiedenster Weise in einem Unterteilungssystem, wie etwa Rippen, Kammern und Röhren erfolgen. Bevorzugte Beispiele des Unterteilungssystems umfassen in Kammern unterteilte Beutel aus wasserdurchlässigem Material oder Presskörper (sogenannte Tabs), die aneinandergrenzende Abschnitte umfassen, in denen das Luftentfeuchtungsmittel unterschiedliche Korngröße aufweist.

Bevorzugt weisen die Beutelkammern unterschiedliches Fassungsvermögen auf.

Da handelsübliche Beutel von Luftentfeuchtungsvorrichtungen Rechteckform besitzen, ist bevorzugt, die Beutelkammern ebenfalls im wesentlichen in Rechteckform auszubilden, um möglichst das gesamte Volumen des Beutels zur Aufteilung in Beutelkammern nutzen zu können.

Ferner hat sich in verschiedenen Versuchen herausgestellt, dass die Entfeuchtungsdynamik der erfindungsgemäßen Vorrichtung auch dadurch beeinflusst werden kann, dass die Luftentfeuchtungsmittel in unterschiedlichen Korngrößen enthaltenden Kammern innerhalb eines Beutels aneinander grenzend gebildet werden, wobei eine Einstellung der Entfeuchtungsdynamik abhängig davon erzielbar ist, ob diese Kammern abwechselnd Luftentfeuchtungsmittel unterschiedlicher Korngröße oder in Gruppen zusammengefasste Kammern umfassen, die dieselbe Korngröße enthalten, wobei die sich anschließende Gruppe Luftentfeuchtungsmittel unterschiedlicher Korngröße enthält. Dieser spezielle Aufbau lässt sich auch auf die Ausführungsform in Gestalt eines Presskörpers anwenden.

Während, wie einleitend ausgeführt, als Luftentfeuchtungsmittel Calciumchlorid grundsätzlich bevorzugt ist, können in den Beutelkammern oder Presskörperabschnitten grundsätzlich auch Luftentfeuchtungsmittel unterschiedlicher chemischer Zusammensetzung und Korngrößen enthalten sein, gegebenenfalls auch eines der eingangs genannten Luftentfeuchtungsmittel, die regenerierbar sind.

Um einem Nutzer die Aktivität des jeweiligen diskret in unterschiedlichen Korngrößen konfektionierten Luftentfeuchtungsmittels z.B. optisch anzuzeigen, können entsprechende Maßnahmen getroffen sein, wie etwa die Bereitstellung von an sich bekannten Farbindikatorsystemen oder eine spezielle konstruktive Auslegung der Unterteilungssysteme, z.B. der Beutelkammern.

Die Erfindung wird nachfolgend anhand der Zeichnung beispielhaft näher erläutert; es zeigen:
- Fig. 1: eine Draufsicht auf einen in Kammern unterteilten Beutel der erfindungsgemäßen Luftentfeuchtungsvorrichtung,
- Fig. 2A bis D: graphische Darstellungen der Wasseraufnahme der erfindungsgemäßen Vorrichtung von unterschiedlich konfektioniertem Luftentfeuchtungsmittel als Funktion der Zeit mit der Temperatur als Parameter, und
- Fig. 3A bis D: graphische Darstellungen der sich durch Wasseraufnahme ergebenden Menge an Salzlösung von unterschiedlich konfektioniertem Luftentfeuchtungsmittel mit der Lufttemperatur als Parameter.

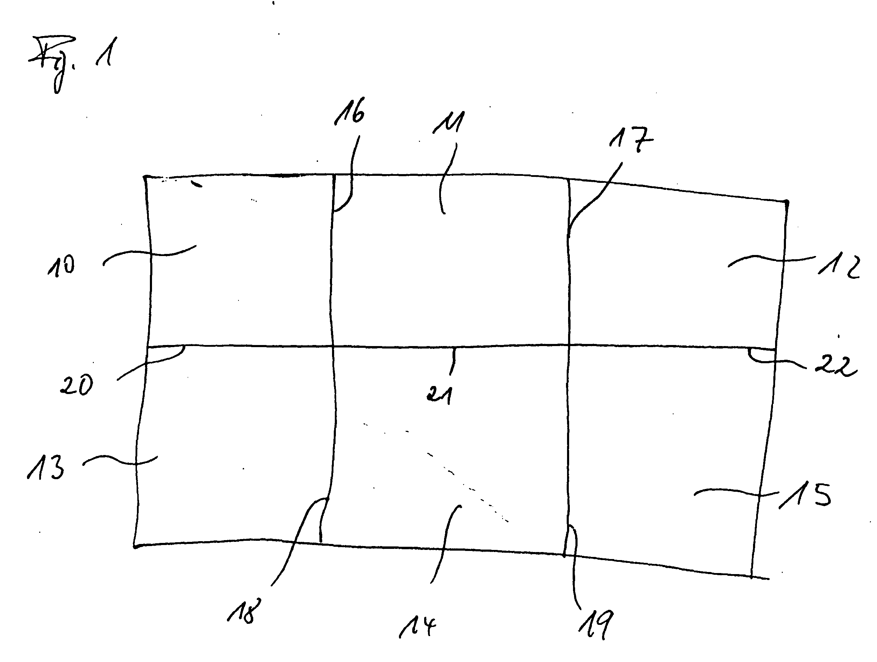

In Fig. 1 ist eine Ausführungsform eines in mehrere Kammern unterteilten Beutels einer erfindungsgemäßen Luftentfeuchtungsvorrichtung gezeigt. Demnach ist der allgemein rechteckige Beutel in sechs gleich große Kammern 10 bis 15 unterteilt, wobei sich in der Darstellung von Fig. 1 an die rechte Seite der Kammer 10 die Kammer 11 anschließt. An die rechte Seite der Kammer 11 schließt sich die Kammer 12 an. Die weiteren drei Kammern 13 bis 15 schließen sich an die Unterseiten der drei Kammern 10 bis 12 derart an, dass die Kammer 13 unter der Kammer 10 zu liegen kommt, dass unter der Kammer 11 die Kammer 14 zu liegen kommt, und dass unter der Kammer 12 die Kammer 15 zu liegen kommt, wobei die Kammer 14 seitlich an die Kammer 13 und die Kammer 15 seitlich an die Kammer 14 angrenzt.

Die Kammern sind voneinander durch Nähte getrennt. So ist die Kammer 10 von der Kammer 11 durch eine Naht 16 getrennt, während die Kammer 12 von der Kammer 11 durch eine Naht 17 getrennt ist. Ferner ist die Kammer 13 von der Kammer 14 durch eine Naht 18 getrennt und die Kammer 15 ist von der Kammer 14 durch eine Naht 19 getrennt. Schließlich ist die Kammer 10 von der Kammer 13 durch eine Naht 20 getrennt, die Kammer 11 ist von der Kammer 14 durch eine Naht 21 getrennt und die Kammer 12 ist von der Kammer 15 durch eine Naht 22 getrennt.

Erfindungsgemäß sind die Kammern 10 bis 15 mit chemischem Luftentfeuchtungsmittel unterschiedlicher Korngröße gefüllt. Beispielsweise kann das Luftentfeuchtungsmittel in der jeweiligen Kammer 10 bis 15 eine von den anderen Kammern unterschiedliche Größe aufweisen. Wenn andererseits Luftentfeuchtungsmittel mit zwei unterschiedlichen Korngrößen verwendet wird, können die Kammern 10 bis 15 beispielsweise so befüllt sein, dass aneinander grenzende Kammern Luftentfeuchtungsmittel unterschiedlicher Korngröße aufweisen. Beispielsweise können in den Kammern 10, 12 und 14 Luftentfeuchtungsmittel einer ersten Korngröße angeordnet sein, während in den restlichen Kammern 11, 13 und 15 Luftentfeuchtungsmittel der zweiten Korngröße angeordnet ist. Alternativ können die Kammern auch zu Gruppen zusammengefasst sein, so dass jeweils zwei aneinander grenzende Kammern, beispielsweise die Kammern 10 und 13 und die Kammern 12 und 15 Luftentfeuchtungsmittel derselben Korngröße aufweisen, während in den dazwischenliegenden Kammern 11 und 14 Luftentfeuchtungsmittel der zweiten Korngröße enthalten ist. Zweck dieser Verteilung von Luftentfeuchtungsmittel unterschiedlicher Korngröße ist, die Entfeuchtungsdynamik der erfindungsgemäßen Luftentfeuchtungsvorrichtung gezielt einzusetzen bzw. zu steuern.

Unter Feuchtigkeitsgrad, der sogenannten relativen Feuchtigkeit von Luft, wird das Verhältnis des bei einer bestimmten Temperatur vorhandenen Wasserdampfgehaltes (absolute Feuchtigkeit in g/m³) zu dem bei dieser Temperatur höchstmöglichen Wasserdampfgehalt (Sättigungsgehalt in g/m³) verstanden. Die Wasserdampfaufnahme der Luft ist begrenzt und hängt von der Temperatur ab und mit steigender Temperatur nimmt das Wasserdampfaufnahmevermögen stark zu.

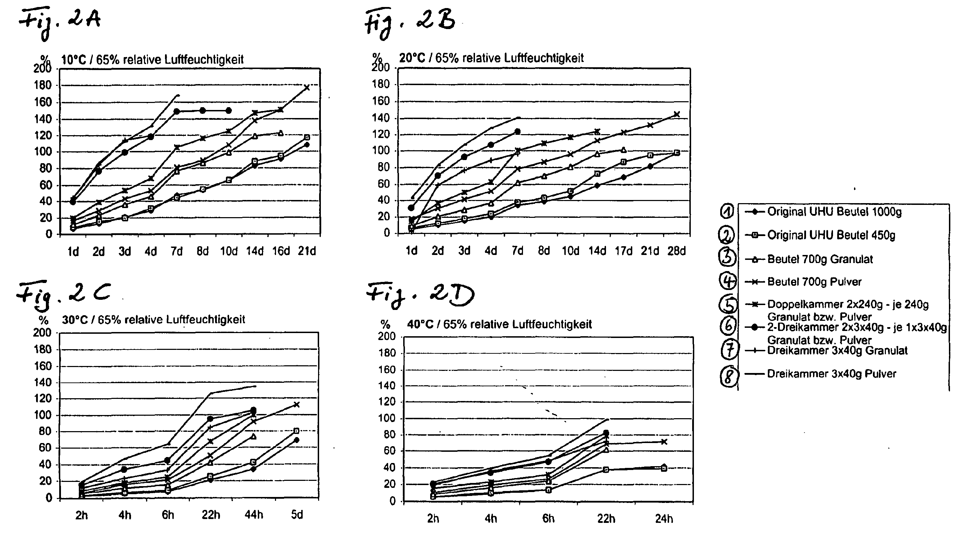

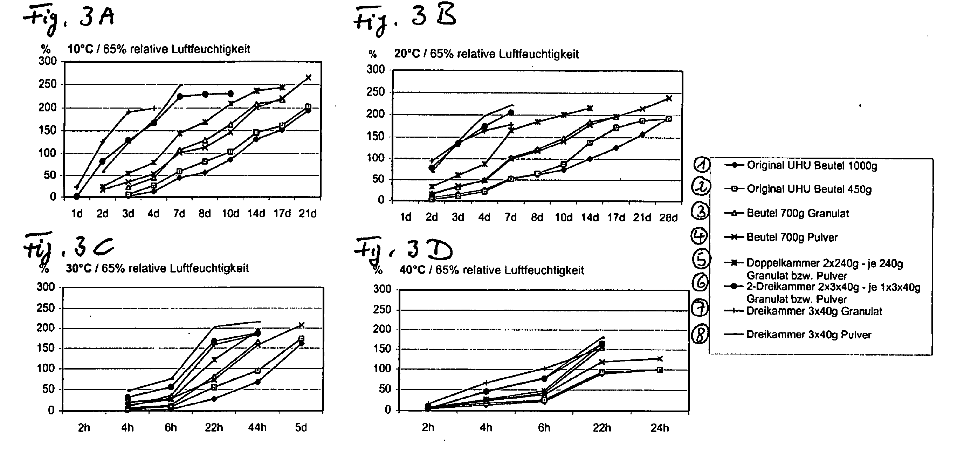

Unter Nutzung dieser Definition des Feuchtigkeitsgrads ist in den Fig. 2A bis D und 3A bis D eine jeweilige Versuchsabfolge von in unterschiedliche Kammern unterteilten Beuteln gezeigt, die mit Luftentfeuchtungsmitteln unterschiedlicher Korngröße gefüllt sind, um die einstellbare Entfeuchtungsdynamik zu erläutern, die mit der erfindungsgemäßen Luftentfeuchtungsvorrichtung erzielbar ist.

Die Proben ① bis ④ betreffen jeweils herkömmliche einkammerige Beutel, während die Proben ⑤ bis ⑧ erfindungsgemäße mehrkammerige Beutel betreffen.

Aus diesen Figuren geht grundsätzlich hervor, dass bei dem erfindungsgemäßen Mehrkammersystem und einer Füllung mit Luftentfeuchtungsmittel unterschiedlicher Korngröße die Dynamik und Dauer des Luftentfeuchtungsvorgangs gezielt gesteuert werden kann.

## Patentansprüche

1. Luftentfeuchtungsvorrichtung mit zumindest einem granulat- bzw. pulverförmigen chemischen Entfeuchtungsmittel, das in einer handhabbaren Form diskret in unterschiedlichen Korngrößen kammerartig konfektioniert ist, wobei das Entfeuchtungsmittel in Gestalt von zumindest einem wasserdurchlässigen Beutel konfektioniert ist, **dadurch gekennzeichnet, dass** der Beutel in Kammern unterteilt ist, und dass das Luftentfeuchtungsmittel in verschiedenen Beutelkammern (10-15) in unterschiedlichen Korngrößen enthalten ist.

2. Vorrichtung nach Anspruch 1, **dadurch gekennzeichnet, dass** die Beutelkammern (10-15) unterschiedliches Fassungsvermögen aufweisen.

3. Vorrichtung nach Anspruch 1 oder 2, **dadurch gekennzeichnet, dass** die Beutelkammern (10-15) im wesentlichen Rechteckform besitzen.

4. Vorrichtung nach Anspruch 1, 2 oder 3, **dadurch gekennzeichnet, dass** das Luftentfeuchtungsmittel in zumindest zwei Korngrößen in verschiedenen Beutelkammern (10-15) angeordnet ist, und dass die Korngrößen derart aufeinander abgestimmt sind, dass die kleinere Korngröße kurzfristig schneller Wasser absorbiert, während die größere Korngröße langfristig mehr Wasser absorbiert.

5. Vorrichtung nach einem der Ansprüche 1 bis 4, **dadurch gekennzeichnet, dass** die Luftentfeuchtungsmittel in unterschiedlicher Korngröße enthaltenden Beutelkammern (10-15) innerhalb eines Beutels aneinander angrenzen.

6. Vorrichtung nach Anspruch 5, **dadurch gekennzeichnet, dass** die Luftentfeuchtungsmittel in unterschiedlicher Korngröße enthaltenden Beutelkammern (10-15) abwechselnd Luftentfeuchtungsmittel unterschiedlicher Korngröße enthalten.

7. Vorrichtung nach einem der Ansprüche 1 bis 6, **dadurch gekennzeichnet, dass** mehrere Luftentfeuchtungsmittel derselben Korngröße enthaltende Kammern in Gruppen zusammengefasst aneinandergrenzen, und dass'Luftentfeuchtungsmittel unterschiedlicher Korngröße enthaltende Gruppen aufeinanderfolgend angeordnet sind.

8. Vorrichtung nach Anspruch 1, **dadurch gekennzeichnet, dass** das Luftentfeuchtungsmittel in zumindest einem Presskörper konfektioniert ist, der aneinander grenzende Abschnitte umfasst, in denen das Luftentfeuchtungsmittel unterschiedliche Korngröße aufweist.

9. Vorrichtung nach einem der Ansprüche 1 bis 8, **dadurch gekennzeichnet, dass** zumindest ein Luftentfeuchtungsmittel aus Calciumchlorid besteht.

10. Vorrichtung nach einem der Ansprüche 1 bis 9, **dadurch gekennzeichnet, dass** chemisch unterschiedliche Luftentfeuchtungsmittel mit unterschiedlichen Korngrößen in handhabbarer Form konfektioniert sind.

11. Vorrichtung nach einem der Ansprüche 1 bis 10, **dadurch gekennzeichnet, dass** ein Mittel zur Anzeige der Aktivität des jeweiligen diskret in unterschiedlichen Korngrößen konfektionierten Luftentfeuchtungsmittels vorgesehen ist.

12. Vorrichtung nach Anspruch 11, **dadurch gekennzeichnet, dass** das Mittel ein optisches Indikatormittel, bevorzugt ein solches mit unterschiedlicher Farbanzeige oder eine spezielle konstruktive Auslegung der Unterteilungssysteme, z.B. der Beutelkammern, umfasst.

## Claims

1. Air dehumidifier having at least one granular or powdery chemical dehumidifying agent which is prepared in the manner of chambers discretely in different grain sizes in a form that can be handled, the dehumidifying agent being prepared in the form of at least one water-permeable bag, **characterized in that** the bag is subdivided into chambers, and **in that** the air dehumidifying agent is contained in different grain sizes in different bag chambers (10-15).

2. Device according to Claim 1, **characterized in that** the bag chambers (10-15) have different holding capacities.

3. Device according to Claim 1 or 2, **characterized in that** the bag chambers (10-15) have a substantially rectangular shape.

4. Device according to Claim 1, 2 or 3, **characterized in that** the air dehumidifying agent is arranged in at least two grain sizes in different bag chambers (10-15), and **in that** the grain sizes are coordinated with one another in such a way that the smaller grain size absorbs water more quickly in the short term, while the larger grain size absorbs more water in the long term.

5. Device according to one of Claims 1 to 4, **characterized in that** the chambers (10-15) containing air dehumidifying agents of different grain size adjoin one another within a bag.

6. Device according to Claim 5, **characterized in that** the bag chambers (10-15) containing air dehumidifying agents of different grain size alternately contain air dehumidifying agents of different grain size.

7. Device according to one of Claims 1 to 6, **characterized in that** a plurality of chambers containing air dehumidifying agents of the same grain size combined into groups adjoin one another, and **in that** groups containing air dehumidifying agents of different grain size are arranged to follow one another.

8. Device according to Claim 1, **characterized in that** the air dehumidifying agent is prepared in at least one pressed body, which comprises mutually adjoining sections in which the air dehumidifying agent has different grain sizes.

9. Device according to one of Claims 1 to 8, **characterized in that** at least one air dehumidifying agent consists of calcium chloride.

10. Device according to one of Claims 1 to 9, **characterized in that** chemically different air dehumidifying agents with different grain sizes are prepared in a form that can be handled.

11. Device according to one of Claims 1 to 10, **characterized in that** a means is provided for indicating the activity of the respective air dehumidifying agent prepared discretely in different grain sizes.

12. Device according to Claim 11, **characterized in that** the means comprises a visual indicating means, preferably one having a different colour indication or a specific constructional design of the subdivision systems, for example of the bag chambers.

## Revendications

1. Déshumidificateur avec au moins un produit chimique de déshumidification sous forme granulée ou pulvérulente, qui est fabriqué de manière séparée sous une forme manipulable dans différentes grosseurs de grains à la manière d'alvéoles, le produit de déshumidification étant fabriqué avec la configuration d'au moins un sachet perméable à l'eau, **caractérisé en ce que** le sachet est divisé en alvéoles et que le produit de déshumidification est contenu dans différentes grosseurs de grains dans différentes alvéoles du sachet (10 à 15).

2. Dispositif selon la revendication 1, **caractérisé en ce que** les alvéoles du sachet (10-15) ont différentes capacités.

3. Dispositif selon la revendication 1 ou 2, **caractérisé en ce que** les alvéoles du sachet (10 à 15) ont sensiblement la forme d'un rectangle.

4. Dispositif selon la revendication 1, 2 ou 3, **caractérisé en ce que** le produit de déshumidification est disposé dans au moins deux grosseurs de grains dans différentes alvéoles du sachet (10 à 15) et **en ce que** les grosseurs de grains sont adaptées les unes aux autres, de sorte que la plus petite grosseur de grains absorbe plus rapidement de l'eau à court terme, alors que la plus grande grosseur de grains absorbe une plus grande quantité d'eau à long terme.

5. Dispositif selon l'une quelconque des revendications 1 à 4, **caractérisé en ce que** les produits de déshumidification sont adjacents à l'intérieur d'un sachet, dans des alvéoles du sachet (10 à 15) contenant différentes grosseurs de grains.

6. Dispositif selon la revendication 5, **caractérisé en ce que** les produits de déshumidification contiennent alternativement du produit de déshumidification de différentes grosseurs de grains dans des alvéoles du sachet (10 à 15) contenant différentes grosseurs de grains.

7. Dispositif selon l'une quelconque des revendications 1 à 6, **caractérisé en ce que** plusieurs alvéoles contenant du produit de déshumidification de la même grosseur de grains sont adjacentes, rassemblées en groupes et **en ce que** des groupes contenant du produit de déshumidification de différentes grosseurs de grains sont disposés successivement.

8. Dispositif selon la revendication 1, **caractérisé en ce que** le produit de déshumidification est fabriqué dans au moins un corps pressé, comportant des sections adjacentes, dans lesquelles le produit de déshumidification a différentes grosseurs de grains.

9. Dispositif selon l'une quelconque des revendications 1 à 8, **caractérisé en ce que**, au moins un produit de déshumidification consiste dans du chlorure de calcium.

10. Dispositif selon l'une quelconque des revendications 1 à 9, **caractérisé en ce que** des produits de déshumidification chimiquement différents sont fabriqués sous une forme manipulable dans différentes grosseurs de grains.

11. Dispositif selon l'une quelconque des revendications 1 à 10, **caractérisé en ce qu'**un produit pour afficher l'activité du produit de déshumidification respectivement fabriqué de façon discrète dans différentes grosseurs de grains est prévu.

12. Dispositif selon la revendication 11, **caractérisé en ce que** le produit est un indicateur optique, de préférence avec différentes indications de couleur ou **en ce qu'**il comprend une conception constructive spéciale des systèmes de division, par exemple des alvéoles du sachet.
